# EUROPÄISCHE PATENTANMELDUNG

(11) **EP 1 052 861 A2**
(43) Veröffentlichungstag der Anmeldung: **15.11.2000**
(21) Anmeldenummer: 00110081.7
(22) Anmeldetag: 12.05.2000
(51) Int. Cl.: H04Q 7/24, H04Q 7/38, H04L 29/06

(54) **Anordnung zur mobilen Kommunikation**

(30) Priorität: 14.05.1999 DE 19922288
(71) Anmelder: SIEMENS AKTIENGESELLSCHAFT, 80333 München (DE)
(72) Erfinder: Gremmelmaier, Ulrich, Dr., 82110 Germering (DE)

(57) **Zusammenfassung**

Anordnung (100) zur mobilen Kommunikation, die mindestens ein Mobilfunknetz (107) und mindestens ein Mobilfunk-Endgerät (105) umfaßt, wobei mit dem Mobilfunknetz über eine Netzkoppeleinheit (109) ein IP-Netz (101) verknüpft ist, welches insbesondere einen Mobilitäts-Server (103) mindestens zur Verwaltung mobilitätsspezifischer Teilnehmerdaten aufweist.

## Beschreibung

Die Erfindung betrifft eine Anordnung zur mobilen Kommunikation nach dem Oberbegriff des Anspruchs 1.

Die mobile Kommunikation einerseits und die computergestützte Kommunikation via Internet sind in wenigen Jahren zu wichtigen Determinanten des gesellschaftlichen Lebens und zu Triebkräften der wirtschaftlichen Entwicklung in allen entwickelten Industrieländern geworden. Auf beiden Gebieten haben sich aus einem mit hoher Geschwindigkeit ablaufenden Innovationsprozeß binnen kurzem globale Massenmärkte mit riesigem Entwicklungspotential herausgebildet.

Trotz der vergleichsweise hohen Geschwindigkeit, mit der die heute angewandten und bereits äußerst komplexen Standards (beispielsweise GSM) entwickelt und festgelegt wurden und mit der an Zukunftsstandards (beispielsweise UMTS) gearbeitet wird, und trotz des beträchtlichen Markterfolges der vorhandenen Systeme sind die Auswirkungen bestimmter Limitierungen heute bereits deutlich spürbar. So gibt es bei der mobilen Kommunikation noch erhebliches Vereinfachungspotential bei der breiten grenzüberschreitenden bis globalen Nutzung (auch als "Roaming" bezeichnet). Spätere Einschränkungen und Erschwernisse gibt es bislang bei der Nutzung der sich ständig dramatisch erweiternden Möglichkeiten des Internet für Teilnehmer der Mobilfunknetze.

Das Zusammenwachsen von Technologien der öffentlichen Mobilfunknetze und des Internet birgt daher ein hohes Innovationspotential im Hinblick auf neue Netzarchitekturen und kosteneffiziente Produkte. In diesem Zusammenhang sind neue Architekturen und Protokolle für die Mobilitätsverwaltung von besonderer Bedeutung.

Der Erfindung liegt daher die Aufgabe zugrunde, eine Anordnung zur mobilen Kommunikation anzugeben, mit der ein vereinfachtes Roaming von Teilnehmern der mobilen Kommunikation, auch zwischen Internet (IP-Netz) und öffentlichem Mobilfunknetz, möglich wird und die insgesamt zu einer Vereinfachung der globalen Sprach- und Datenkommunikation beiträgt.

Diese Aufgabe wird durch eine Anordnung mit den Merkmalen des Anspruchs 1 gelöst.

Die Erfindung schließt den grundlegenden technischen Gedanken ein, eine IP-basierte Anordnung anzugeben, die sowohl für IP-basierte Mobilstationen (nachfolgend auch bezeichnet als "IP-MS") als auch für Mobilstationen (auch als "MS" bezeichnet) nach herkömmlichem Mobilfunkstandard zugreifbar ist und bei der das Roaming mittels eines dem IP-Netz zugeordneten (bzw. in diesem vorgesehenen) speziellen Mobilitäts-Server (nachfolgend auch bezeichnet als MPS = Mobility Proxy Server) realisiert wird.

Die Mobilstationen der einzelnen Teilnehmer - ob mobile Computer oder Mobiltelefone - erhalten über ein Funkzugangsnetz (auch bezeichnet als RAC = Radio Access Network) Zugang zu einem IP-Netz. Über dieses ist ein Zugang zu einem öffentlichen Mobilfunknetz (nachfolgend auch bezeichnet als PLMN = Public Land Mobile Network), beispielsweise das GSM- oder das künftige UMTS-Netz, möglich. Natürlich ist auch der direkte Zugang einer herkömmlichen Mobilstation (Mobiltelefon) zum PLMN in der bisher üblichen Weise möglich.

Die wesentlichen Funktionen des Mobilitäts-Servers (MPS) sind:
- die Verwaltung von mobilitätsspezifischen Teilnehmerdaten (bei Integration von lokalen Datenbasen HLR(IP)(= Home Location Register (IP)),
- die Funktion eines Mittlers mit einheitlicher Protokollschnittstelle zwischen einer Netzkoppeleinheit (Access Server/IWU = Interworking Unit) bzw. einem Visitor Location Register(IP) = (VLR(IP)) und den mobilitätsspezifischen Teilnehmerdaten,
- das Scheduling des Protokollablaufs zwischen den beteiligten Komponenten und
- die Formatanpassung zwischen unterschiedlichen Adressierungs- und Namensschemata sowie unterschiedlichen Protokollen des IP-Netzes und angeschlossener Netze (Mobilfunk- oder auch Firmennetze LAN = Local Area Networks).

Weiterhin kann der MPS sicherheitsrelevante Teilnehmerdaten (Authentifikationsdaten) verwalten, die insbesondere in einer speziellen Datenbasis (AUC = Authentication) gehalten sind.

Die vorgeschlagene Anordnung kann in einer speziell für große Netze mit einer großen Anzahl von Teilnehmern bevorzugten Ausführung Datenbasen-Server zur Verknüpfung des Mobilitäts-Servers mit den lokalen Datenbasen aufweisen.

Neben den genannten Verwaltungsfunktionen besteht eine wichtige Funktion des Mobilitäts-Servers in einer bevorzugten Ausführung in der Umsetzung von durch angeschlossene Datenterminals übermittelten Netzzugangs-Kennworten (NAI = Network Access Identifier) in IP-Adressen, wodurch in vorteilhafter Weise eine Trennung von mobiler Teilnehmerkennung und Netzadressierung erreicht wird.

Ein wesentlicher Vorteil der oben kurz skizzierten und nachfolgend genauer erläuterten Architektur besteht in der Trennung von Datenbanktunktionen (beispielweise Teilnehmerverwaltung, HLR) von der Protokollumsetzung und Adressierung. Diese Trennung ermöglicht es nämlich im Interesse der Erhöhung der Datensicherheit des Systems, für einen Client, der Anfragen an den MPS stellt, die genauen Methoden des Datenbankzugriffs unsichtbar zu lassen.

Ein weiterer wesentlicher Vorteil der Architektur besteht in ihrer Modularität, aufgrund derer Protokolländerungen an einer Schnittstelle grundsätzlich auf diese begrenzt werden können und sich nicht zwangsläufig auf andere auswirken.

In der Ausführung mit Proxy-Mechanismus bzw. Unterstützung eines hierarchischen Proxy-Server-Konzepts (das als solches aus der Internet-Praxis bereits bekannt ist) wird Skalierbarkeit des Systems ohne weiteres erreichbar.

Der bevorzugte weitgehende Einsatz offener Schnittstellen ermöglicht die relativ einfache Verwendung von (im Sinne der IETF) standardisierten Serverprotokollen, wie z.B. der Protokolle RADIUS oder Gatekeeper. Die Nutzung dieser Netzkomponenten zur Ausführung der ihnen ursprünglich konzeptgemäß zugewiesenen Aufgaben bleibt damit nach wie vor möglich.

Vorteile und Zweckmäßigkeiten der Erfindung ergeben sich im übrigen aus den Unteransprüchen sowie der nachfolgenden Beschreibung bevorzugter Auführungsbeispiele anhand der Figuren. Von diesen zeigen:
- Fig. 1: eine Prinzipskizze (Netzszenario) einer bevorzugten Ausführungsform als Gesamtdarstellung,
- Fig. 2: eine schematische Darstellung der Architektur und Schnittstellen eines Mobilitäts-Servers der Anordnung nach Fig. 1,
- Fig. 3: eine schematische Darstellung des Ablaufs bei einer Location Registration,
- Fig. 4: eine Prinzipskizze (Netzszenario) einer weiteren Ausführungsform und
- Fig. 5: eine weitere Prinzipskizze zur Darstellung eines Ausführungsbeispiels der Erfindung.

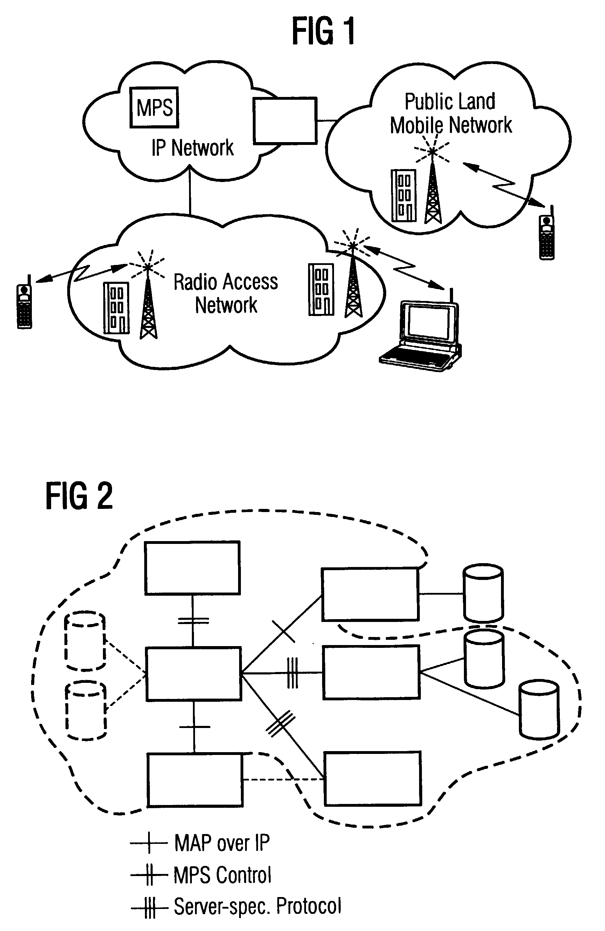

Fig. 1 zeigt in skizzenhafter Darstellung das Prinzip einer wirtschaftlich besonders wichtigen Netzkonfiguration 100 gemäß der Erfindung, deren Kernstück ein IP-Netz 101 mit einem als Proxy-Server ausgebildeten Mobilitäts-Server 103 ist. Mobiltelefone 105 können einerseits über ein herkömmliches Mobilfunknetz (PLMN) 107, beispielsweise ein GSM-Netz oder das künftige UMTS-Netz, über eine Netzkoppeleinheit 109 Zugang zum IP-Netz 101 erhalten. Andererseits ist für die Verbindung sowohl von Mobiltelefonen 105 als auch von mobilen Datenterminals 111 mit dem IP-Netz 101 ein spezielles Funkzugangsnetz (RAC) 113 vorgesehen. Sowohl im öffentlichen Mobilfunknetz 107 als auch im speziellen Funkzugangsnetz 113 sind mit den Mobiltelefonen 105 und wahlweise auch dem mobilen Datenterminal 111 kommunizierende Basisstationen 115 vorgesehen.

Fig. 2 zeigt die Architektur und Schnittstellen des Mobilitäts-Servers 103 nach Fig. 1. Dessen Verbindung mit dem öffentlichen Mobilfunknetz erfolgt (wie bereits in Fig. 1 skizziert) über die Netzkoppeleinheit 109, der in an sich bekannter Weise ein Home Location Register (HLR) 109a im (hier nicht dargestellten) Mobilfunknetz zugeordnet ist. Innerhalb des IP-Netzes 101 ist dem Mobilitäts-Server 103 ein HLR-Server 103.1 zugeordnet, über den eine IP-netzinterne Datenbasis HLR(IP) 103.2 und eine IP-netzinterne Authentifikations-Datenbasis (AUC) 103.3 verwaltet werden. Optional können Datenbasen 103.2' bzw. 103.3' dem Mobilitäts-Server 103 auch direkt - ohne Zwischenschaltung eines HLR-Servers - angeschlossen sein. Weiterhin ist dem Mobilitäts-Server 103 ein den Zugang zum RAC 113 (Fig. 1) verwaltender Funkzugangs-Server 103.4 zugeordnet, über den optional (in der Figur durch eine gestrichelte Linie dargestellt) ein Visitor Location Register des IP-Netzes (VLR(IP)) 103.5 verwaltet werden kann. Mit der durchgezogenen Verbindungslinie in Fig. 2 zwischen dem Mobilitäts-Server 103 und dem VLR(IP) 103.5 ist angedeutet, daß die direkte Zuordnung des VLR(IP) zum Mobilitäts-Server die bevorzugte ist. Mit der Darstellung eines zweiten MPS 103' soll verdeutlicht werden, daß die vorgeschlagene Netzstruktur auch mehrere Mobilitäts-Server umfassen kann. In der Figur sind diejenigen Blöcke, die dem IP-Netz zugehörige Komponenten darstellen, vollständig innerhalb der das IP-Netz 101 symbolisch abgrenzenden gestrichelten Linie angeordnet, während die beiden Schnittstellen 109 und 103.4 durch eine diagonale Unterteilung und ihre Anordnung auf der gestrichelten Linie als Koppeleinheiten gekennzeichnet sind. Der Zugangs-Server (IWU) 103.4 terminiert die für das Funkzugangsnetz spezifischen Protokolle und Schnittstellen. Wenn eine Mobilstation aktiv ist, verwaltet er beispielsweise einen "Tunnel" oder eine "Session" zur entsprechenden Mobilstation 105 bzw. ein Datenterminal 111. Als Teilaufgabe im Rahmen der Mobilitätsverwaltung kommt dem Zugangs-Server 103.4 weiterhin die Absetzung von Registrierungs- und Authentifizierungsinformationen sowie sogenannten Location-Management-Nachrichten an den MPS 103 zu.

Wenn über das Funkzugangsnetz z.B. ein GSM-Mobiltelefon 105 (Fig. 1) angeschlossen ist, wird von diesem über den Zugangs-Server 103.4 eine im GSM-Protokoll festgelegte spezielle Kennung, die sogenannte IMSI (International Mobile Subscriber Identity) an den MPS 103 übermittelt. Falls ein IP-basiertes mobiles Datenterminal 111 (Fig. 1) an das Funkzugangsnetz angeschlossen ist, wird neben dieser IMSI-Kennung weiterhin der NAI an den MPS 103 übermittelt. Dieser ist zur Verarbeitung beider Kennungen ausgebildet, wobei zusammengehörige Kennungen IMSI - NAI in einer Zuordnungstabelle gespeichert sind. Diese Zuordnungstabelle kann zur Aufnahme anderer Daten, beispielsweise von Rufnummern, erweitert werden. Der Zugangs-Server 103.4 selbst ist - wie aus der Figur schon ersichtlich wird - an das IP-Netz 101 angeschlossen und hat dort eine bekannte Adresse.

Der MPS verwaltet gemäß der in Fig. 2 dargestellten Architektur mobilitätsspezifische und sicherheitsrelevante Teilnehmerdaten, die in den Datenbasen HLR(IP) bzw. AUC gespeichert sind. Die Funktion des HLR(IP) 103.2 entspricht der Funktion eines HLR in einem herkömmlichen Mobilfunknetz. Die Daten für die Teilnehmerauthentifizierung werden in der separaten Datenbasis AUC 103.3 gespeichert gehalten. Der in der Figur gezeigte HLR-Server 103.1 ist optional als Front-End für die eigentliche Datenbank angeschlossen. Er kann beispielsweise auf der Basis eines RADIUS-Servers realisiert werden. Der MPS 103 führt die Protokollanpassung zum HLR(IP) 103.2 hin durch.

Im VLR(IP) sind temporäre, für den Aufenthaltsort spezifische Teilnehmerkennungen und Verschlüsselungsdaten enthalten, beispielsweise für GSM-Mobilstationen die sogenannte TMSI (Temporary Mobile Subscriber Identity). Das hier als separater Block gezeigte VLR(IP) kann auch im Zugangs-Server 103.4 integriert sein. Typischerweise ist das VLR(IP) einem bestimmten Bereich des Funkzugangsnetzes zugeordnet. Bei einer Ortsveränderung des Teilnehmers hin zu einem neuen VLR(IP) werden veraltete ortsspezifische Daten entweder vom MPS 103 an ein neues "zuständiges" VLR(IP) übertragen und dann im bisherigen VLR(IP) vom MPS gelöscht, oder sie werden auf der Basis einer internen Zeitsteuerung im früher zuständigen VLR(IP) automatisch gelöscht. Die letztere Möglichkeit - die natürlich dann alle Daten des VLR(IP) betreffen würde - setzt voraus, daß der MPS 103 periodisch sämtliche ortsspezifischen und noch aktuellen Informationen erneuert bzw. auffrischt.

Das PLMN-Gateway 109 übernimmt die Übermittlung von Signalisierungsnachrichten vom öffentlichen Mobilfunknetz 107 (Fig. 1) ins IP-Netz 101 oder umgekehrt, insbesondere zum HLR 109a, wodurch die Aktualisierung ortsspezifischer und anderer Teilnehmerdaten (das sogenannte "Location Update") zwischen dem IP-Netz und dem öffentlichen Netz ermöglicht wird.

Auf den Schnittstellen werden die im Kasten rechts unten in Fig. 2 angegebenen Protokolle verwendet: "MAP over IP" bzw. "Mobility Proxy Server Control Protocol (MPSCP)". "MAP over IP" transportiert im wesentlichen mobilitätsspezifische und sicherheitsrelevante Daten und setzt auf SCCP auf; "MSCSP" dient zum Weiterreichen von Anfragen und zur Lastteilung bei großen Netzen. Falls - wie in Fig. 2 durch die MPS 103 und 103' symbolisiert - mehrere MPS für ein IP-Netz eingesetzt werden, werden sie in einer Hierarchie organisiert, die nach dem Domain Name System aufgebaut ist. Die Adresse und Lage des MPS in der Hierarchie kann aus dem domain-spezifischen Teil des NAI abgeleitet werden. Da das HLR(IP) 103.2 und das VLR(IP) 103.5 auf der Basis von Standardkomponenten wie RADIUS-Server oder Gatekeeper realisiert werden können, kann der MPS 103 an diesen Schnittstellen entsprechende protokollspezifische Anpassungen unterstützen. Das "MSCSP" kann als Client-Server-Protokoll realisiert werden, welches als Container-Protokoll für Anfragen an die weiterhin mitwirkenden Server bzw. für Antworten von diesen dient.

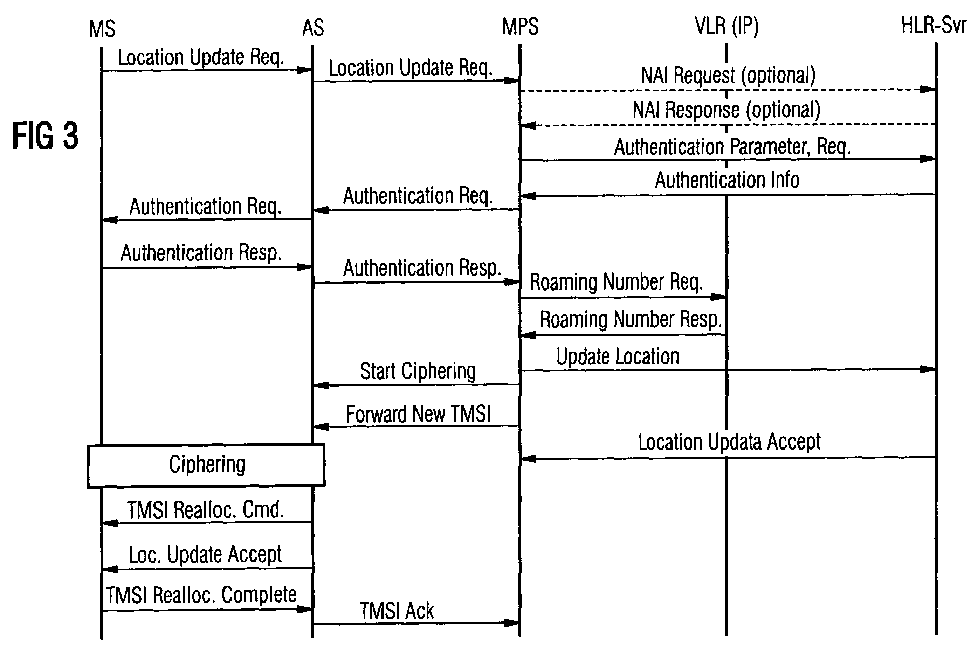

In Fig. 3 ist als Ausführungsbeispiel schematisch ein Location-Registration-Vorgang gemäß GSM-Protokoll für ein GSM-Funkzugangsnetz mit GSM-Mobilstationen und HLR-Server (ohne direkte PLMN-Anbindung) dargestellt. Die AUC-Funktion ist in der Figur und nachfolgend nicht näher erläutert. Der Ablauf ist der folgende:
- Mobilstation (MS) sendet Location Update Request an Access Server/IWU und übermittelt dabei die IMSI.
- Access Server/IWU reicht den Location Update Request (und die IMSI) an den MPS weiter.
- MPS ermittelt NAI anhand der IMSI für diesen Teilnehmer und speichert die Zuordnung in einer Tabelle ab. Der NAI kann auf zwei Arten ermittelt werden: 1) Er wird frei vergeben, 2) er wird vom HLR-Server erfragt (vgl. Abb. 3: NAI Request bzw. Response). An den HLR-Server sendet der MPS einen Authentication Parameter Request.
- Der MPS übermittelt die Authentisierungsinformation vom HLR-Server als Authentication Request an Access Server/IWU bzw. Mobilstation.
- Die Mobilstation antwortet dem MPS mit Authentication Response nach erfolgter Authentisierungsprozedur (in Abb. 3 nicht eingezeichnet).
- Der MPS erfragt eine Mobile Station Roaming Number (MSRN) beim VLR(IP) mit Roaming Number Request. Das VLR(IP) ist in diesem Fall mittels Gatekeeper realisiert; der Gatkeeper verwaltet die Zuordnung MSRN-IP-Adresse (des Access Server/IWU). Nach dem Erhalt der Roaming Number Response fügt der MPS die MSRN in die Zuordnungstabelle IMSI-NAI zusätzlich ein.
- Der MPS schickt Teilnehmerdaten mittels Update Location an den HLR-Server (IMSI; Mobile Station Roaming Number).
- Der MPS startet die Nutzdatenverschlüsselung (Start Ciphering).
- Der MPS generiert die TMSI (an Stelle des VLR(IP)) und schickt sie an die Mobilstation (Forward New TMSI).
- Der HLR-Server bestätigt die Eintragung der Teilnehmerdaten (Location Update Accept).
- Der MPS übermittelt die TMSI an die Mobilstation (TMSI Relocation Command).
- Der MPS schickt einen Location Update Accept an den Access Server/IWU.
- Mobilstation bzw. Access Server/IWU bestätigen (TMSI Relocation Complete, TMSI Ack).

Der Vorteil des MPS wird hinsichtlich der Verwendung des NAI vor allem dann deutlich,
- wenn die Mobilstation IP-basiert ist. Dann wird der NAI direkt von der Mobilstation an den MPS geliefert, der daraus mit Hilfe des Domain Name Systems die IP-Adresse, die "richtige" Hierarchiestufe und damit den zu adressierenden HLR-Server herausfindet;
- wenn der NAI zur Ermittlung der IP-Adresse des jeweiligen MPS (bei hierarchischer Konfiguration) und damit des HLR-Servers verwendet wird.

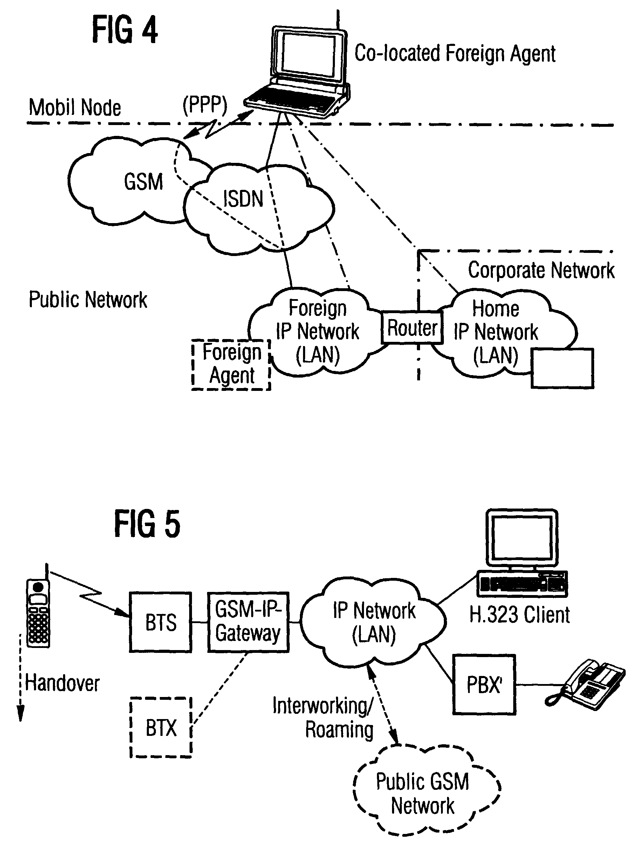

In Fig. 4 ist skizzenhaft eine weitere Netzstruktur gemäß einer spezifischen Ausführungsform der Erfindung dargestellt. Hierbei ist das Kernstück ein als LAN (Local Area Network) ausgebildetes IP-Netz 301, das über einen sogenannten Router 303 mit einem firmeneigenen, ebenfalls als LAN ausgebildeten IP-Netz 305 verknüpft ist. Über die Verbindung beider Netze miteinander kann eine Verbindung zwischen einem dem firmeneigenen Netz angeschlossenen "Home Agent" 307 und einem dem fremden Netz angeschlossenen "Foreign Agent" 309 hergestellt werden. Mit beiden Netzen 301 und 305 kann über eine Funkstrecke ein Datenterminal 311 eines sogenannten "Co-Located Foreign Agent" verbunden sein. Dieses ist zudem über ein ISDN-Netz 313 mit dem fremden IP-Netz 301 verbunden, und eine weitere Verbindung besteht zwischen dem Datenterminal 311 über ein öffentliches Mobilfunknetz 315 nach GSM-Standard und das ISDN-Netz 313 zum fremden Netz 301.

Der im Kontext der vorliegenden Erfindung relevante Aspekt der Anordnung nach Fig. 4 ist - neben der Illustration der wichtigen Funktionen "Home Agent" und "Foreign Agent" - die Möglichkeit einer nahtlosen Verbindung einer Mobilstation mit einem Firmennetz zum einen via Ethernet oder aber durch ein Einwählen über ISDN bzw. GSM über den Mobilknoten (Mobile Note). Im übrigen ist die hier gezeigte Konfiguration eine nützliche Test-Konfiguration für die Vorbereitung der Implementierung einer Anordnung nach Fig. 1. Zur Unterstützung des automatischen, nutzertransparenten Wechsels zwischen verschiedenen Zugriffsoptionen wird für den Mobilknoten in vorteilhafter Weise eine spezielle Mobilitäts-Steuerung (Mobility Manager) implementiert, die gegebenenfalls den Verlust eines Trägers (beispielsweise eine Unterbrechung der Verbindung des Mobilknotens zum Ethernet des firmeneigenen Netzes) diktiert und eine automatische Umschaltung zu einem anderden Zugriffs-Träger (beispielsweise auf eine GSM-gestützte Verbindung) veranlaßt. Sobald der neue Träger verfügbar ist, initiiert das Protokoll eine Umleitung der Datenpakete zu der neuen Adresse. Der Träger-Nachweis wird bevorzugt mit einer optimierten DHCP(Dynamic Host Configuration Protocoll)-Client-Implementierung ausgeführt, die die Verfügbarkeit eines Trägers in kurzen Zeitabständen prüft.

In Fig. 5 ist eine grundsätzlich zu Fig. 1 ähnliche Anordnung skizziert, die zur Illustration der Anwendung der Erfindung speziell für die GSM-Anbindung eines firmeneigenen IP-Netzes dient. Die Gesamtanordnung 400 umfaßt ein Mobiltelefon 401, einen Laptop 403 und ein Festnetz-Endgerät 405 als Endgeräte, ein LAN 407 und das öffentliche GSM-Netz 409. Die Verbindung zwischen dem Mobiltelefon 401 und dem LAN 407 wird über Basisstationen 411 bzw. (nach einem Handover) 411' und eine Netzkoppeleinheit (GSM-IP-Gateway) 413 - funktionell der Netzkoppeleinheit 109 entsprechend - hergestellt. Der Anschluß des Festnetz-Endgerätes 405 an das LAN- bzw. IP-Netz 407 erfolgt in an sich bekannter Weise über eine Nebenstellenanlage (PBX') 415.

Die Ausführung der Erfindung ist nicht auf die oben dargestellten Beispiele beschränkt, sondern auch in Abwandlungen möglich, die sich dem Fachmann aufgrund der hier gegebenen allgemeinen Hinweise erschließen.

## Patentansprüche

1. Anordnung (100; 300; 400) zur mobilen Kommunikation, die mindestens ein Mobilfunknetz (107; 315; 409) und mindestens ein Mobilfunk-Endgerät (105; 311; 401) umfaßt,
**dadurch gekennzeichnet**, daß
mit dem Mobilfunknetz über eine Netzkoppeleinheit (109; 413) ein IP-Netz (101; 301, 305; 407) verknüpft ist, welches insbesondere einen Mobilitäts-Server (103) mindestens zur Verwaltung mobilitätsspezifischer Teilnehmerdaten aufweist, welcher Mittel zur Formatanpassung unterschiedlicher Protokolle und/oder Adressierungs- und Namensschemata des IP-Netzes (101) und des Mobilfunknetzes (107) oder der Mobilfunknetze umfaßt.

2. Anordnung nach Anspruch 1,
**dadurch gekennzeichnet**, daß
der Mobilitäts-Server (103) mit einer Mehrzahl lokaler Datenbasen (103.2, 103.2', 103.3, 103.3', 109) verknüpft ist.

3. Anordnung nach Anspruch 2,
**dadurch gekennzeichnet**, daß
die Anordnung (100) mindestens einen Datenbasen-Server (103) zur Verbindung mit den lokalen Datenbasen aufweist.

4. Anordnung nach einem der vorangehenden Ansprüche,
**dadurch gekennzeichnet**, daß
der Mobilitäts-Server (103) Mittel (103.1, 103.3, 103.3') zur Verwaltung sicherheitsrelevanter Teilnehmerdaten, insbesondere als separate Sicherheitsdatenbasis, aufweist.

5. Anordnung nach einem der vorangehenden Ansprüche,
**dadurch gekennzeichnet**, daß
der Mobilitäts-Server zur Umsetzung von durch angeschlossene Datenterminals (111) übermittelten Netzzugangs-Kennworten in IP-Adressen ausgebildet ist, wobei er insbesondere eine entsprechende Zuordnungstabelle gespeichert hält.

6. Anordnung nach einem der vorangehenden Ansprüche,
**dadurch gekennzeichnet**, daß
dem IP-Netz (101) ein Funkzugangsnetz (113) zugeordnet ist, welches einen Zugang von mobilen Datenterminals (111) zum IP-Netz und über dieses zum Mobilfunknetz (107) bzw. zu den Mobilfunknetzen ohne Änderung einer IP-Heimatadresse ermöglicht.

7. Anordnung nach Anspruch 7,
**dadurch gekennzeichnet**, daß
zur Verbindung zwischen dem IP-Netz (101) und dem Funkzugangsnetz (113) ein Funkzugangs-Server (103.4) vorgesehen ist, welcher insbesondere über ein "MAP over IP"-Protokoll mit dem Mobilitäts-Server (103) des IP-Netzes verbunden ist.
